# EUROPEAN PATENT SPECIFICATION

(11) **EP 2 942 175 B1**
(45) Date of publication and mention of the grant of the patent: **25.12.2019**
(21) Application number: 15166113.9
(22) Date of filing: 01.05.2015
(51) Int. Cl.: B29C 44/56, B64C 1/40

(54) **AIRCRAFT FOAM INSULATION METHOD AND APPARATUS**
FLUGZEUGSCHAUMISOLIERUNGSVERFAHREN UND VORRICHTUNG
PROCÉDÉ D'ISOLATION EN MOUSSE D'AÉRONEF ET APPAREIL

(30) Priority: 05.05.2014 US 201414270048
(43) Date of publication of application: 11.11.2015
(73) Proprietor: The Boeing Company, Chicago, IL 60606-1596 (US)
(72) Inventor: Younie, Mark Lawrence, Chicago, IL 60606 (US)
(74) Representative: Boult Wade Tennant LLP

(56) References cited:
- US-A- 3 730 031
- US-A1- 2005 173 826
- US-A1- 2006 000 186
- US-A1- 2006 107 806

## Description

### Field

The present disclosure generally relates to insulation and, more specifically, to foam insulation used in aircraft.

### Background

Fabrication of a commercial aircraft typically consists of building an airframe (sometimes referred to as a primary structure or fuselage) consisting of a series of vertically oriented frames, or ribs, that encircle a cabin area for transporting personnel and cargo. The outboard sides of the frames are covered with an outboard wall or skin and the inboard sides of the frames in the cabin area may similarly be covered with sidewall trim panels. Along the outboard wall and between the frames, other aircraft components such as insulation, electrical conduits, ventilation ducting, control mechanisms, and the like may be installed, so that they may be enclosed between the outboard wall and the sidewall trim panels. Provisions must also be made for windows that must extend through the space between the inner and outboard walls.

The sidewall trim panels of commercial passenger aircraft are typically configured as a number of generally curved vertical panels that extend between the floor and storage bin of the aircraft in a side-to-side manner along either interior wall of the aircraft. Insulation is located behind the sidewall trim panels. The insulation provides a number of functions including regulation of temperature, reduction of engine noise, reduction of noise from outside air turbulence, and protection of mechanical and structural components within the aerospace systems from moisture and temperature extremes that might tend to damage or corrode the components. All of these functions are enhanced by the close contact of insulation to fuselage surfaces including frames, stringers and skin, as well as close contacting fit to brackets or other hardware that is fastened to the frames.

The installation and placement of insulation within the inter-sidewall space can be difficult and time-consuming. Historically, bats of woven insulation or bags of limp fiberglass have been affixed to the exterior wall and fuselage of the aircraft cabin and held in place with brackets and clips inserted through the insulation material, so that they may be held in place until the sidewall trim panels can be installed over the insulation materials. Installation of this type of insulation, however, can be time-consuming and require support brackets that add weight to the aircraft. More recently, self-supporting foam insulation has been introduced that may be fabricated as insulation panels sized for insertion between frame members defining one or more frame bays. The configuration of the insulation panel and how it engages the fuselage frames retains the insulation panel in place without requiring additional brackets or other ancillary support members that add weight to the aircraft.

While the foam insulation panels provide distinct advantages over the previous insulation methods, they can be difficult to fabricate due to the complex contours into which their surfaces must be shaped. In particular, the inboard surface of the insulation panel must generally match the contours of the sidewall trim panel, which may include recessed portions and window reveals. Contouring of the insulation panels is currently accomplished by hand using manual tools. This process requires not only requires skilled craftsmen to properly shape the insulation panel, but also generates dust as foam material is removed that must be controlled to limit release to the immediate environment.

Thus, it is highly desirable to provide an insulation panel and design that is easier to fabricate and reduces generation of dust.

US3730031A relates to apparatus for cutting tridimensional surfaces from foam or like material in which the foam is compressed by two vertically adjustable rollers in the cutting area and moved relative to a cutter. At least one of such rollers is provided with a shaped casing or circumferential surface, and a flexible conveyor belt is interposed between each of the rollers and the foam material for pulling the foam material through the cutting area.

US2006/000186A1 relates to a panel structure and a method of forming the panel structure. The panel structure typically includes at least one panel associated with a material. The panel structure may be used as an interior panel of an airplane.

### Summary

Herein described is a method for manufacturing a foam insulation panel to include a first panel feature conforming to a first feature of an aircraft sidewall assembly, the method comprising:
rotating first and second roller dies to advance a foam insulation block along a travel path;
compressing opposed first and second surfaces of the foam insulation block in a first direction;
positioning a cutter along the travel path downstream of the first and second roller dies and orientating said cutter to cut transversely through the foam insulation block in a second direction substantially perpendicular to the first direction to separate the foam insulation block into an excess layer and the foam insulation panel; and
translating the foam insulation block in the first direction by an offset distance determined from the aircraft sidewall assembly first feature to form the first panel feature in the foam insulation panel,
wherein the first and second roller dies are configured to compress and translate the foam insulation block,
wherein the first roller die includes a first male die portion and the second roller die includes a first female die portion having a shape complementary to the first male die portion, wherein the first male die portion and the first female die portion are sized relative to the aircraft sidewall assembly first feature.

Also herein described is a surface forming apparatus for manufacturing a foam insulation panel to include a first panel feature conforming to a first feature of an aircraft sidewall assembly, the surface forming apparatus comprising:
first and second roller dies positioned to engage and compress opposed first and second surfaces of a foam block in a first direction, the first and second roller dies being rotatable to advance the foam block along a travel path;
a first male die portion provided on the first roller die and a first female die portion provided on the second roller die and shaped complementary to the first male die portion, the first male and female die portions configured to translate the foam insulation block in the first direction by an offset distance; and
a cutter positioned along the travel path downstream of the first and second roller dies and oriented to transversely cut the foam insulation block in a second direction substantially perpendicular to the first direction thereby to separate the foam insulation block into an excess layer and the foam insulation panel, wherein the first male die portion and the first female die portion are configured to form the first panel feature in the foam insulation panel.

In another example of the disclosure that may be combined with any of these examples, compressing and translating the foam insulation block are performed simultaneously.

In another example of the disclosure that may be combined with any of these examples, the aircraft sidewall assembly further comprises a second feature, the method further comprising translating the foam insulation block in the first direction by a second offset distance determined from the aircraft sidewall assembly second feature.

In another example of the disclosure that may be combined with any of these examples, the first roller die includes a second male die portion, the second roller die includes a second female die portion having a shape complementary to the second male die portion, and the second male die portion and the second female die portion are sized relative to the aircraft sidewall assembly second feature.

In another example of the disclosure that may be combined with any of these examples, the first and second male die portions are positioned in a tiered configuration on the first roller die, and in which the first and second female die portions are positioned in a tiered configuration on the second roller die.

In another example of the disclosure that may be combined with any of these examples, the aircraft sidewall assembly first feature comprises a window reveal defining a trim opening and the aircraft sidewall assembly second feature comprises a trim recess, and in which the first male and female die portions are configured to form the first panel feature as a window aperture corresponding to the trim opening, and the second male and female die portions are configured to form the second panel feature as a curved recess contour having a shape complementary to the trim recess.

In another example of the disclosure that may be combined with any of these examples, the aircraft sidewall assembly first feature comprises a window reveal defining a trim opening, and in which the first male die portion and the first female die portion are configured to form the first panel feature as a window aperture corresponding to the trim opening.

In another example of the disclosure that may be combined with any of these examples, the offset distance of the first male and female die portions is determined from the aircraft sidewall assembly first feature.

In another example of the disclosure that may be combined with any of these examples, the aircraft sidewall assembly further includes a second feature, and in which the apparatus further includes a second male die portion provided on the first roller die, and a second female die portion provided on the second roller die and shaped complementary to the second male die portion, the second male and female die portions configured to translate the foam insulation block in the first direction by a second offset distance.

In another example of the disclosure that may be combined with any of these examples, the second offset distance of the second male and female die portions is determined from the aircraft sidewall assembly second feature.

The features, functions, and advantages that have been discussed can be achieved independently in various embodiments or may be combined in yet other embodiments further details of which can be seen with reference to the following description and drawings.

### Brief Description of the Drawings

FIG. 1 shows an exploded, perspective view of a trim sidewall, foam insulation panel, and airframe according to an embodiment of the present disclosure.
FIG. 2 shows a side elevation view of surface forming apparatus with first and second roller dies in a first rotational position, according to an embodiment of the present disclosure.
FIG. 3 shows a side elevation view of the surface forming apparatus of FIG. 2 with the first and second roller dies in a second rotational position.
FIG. 4 shows enlarged perspective views of the first and second roller dies used in the surface forming apparatus of FIGS. 2 and 3.
FIG. 5 is a flow diagram of a method for manufacturing a foam insulation panel to include a panel feature conforming to a first feature of an aircraft sidewall assembly, according to an embodiment of the present disclosure.

It should be understood that the drawings are not necessarily drawn to scale and that the disclosed embodiments are sometimes illustrated schematically. It is to be further appreciated that the following detailed description is merely exemplary in nature and is not intended to limit the invention or the application and uses thereof. Hence, although the present disclosure is, for convenience of explanation, depicted and described as certain illustrative embodiments, it will be appreciated that it can be implemented in various other types of embodiments and in various other systems and environments.

### Detailed Description

The following detailed description is of the best currently contemplated modes of carrying out the invention. The description is not to be taken in a limiting sense, but is made merely for the purpose of illustrating the general principles of the invention, since the scope of the invention is best defined by the appended claims.

For ease of understanding the orientation in the drawings, the terms "inside", "inboard", and "interior" shall refer to a direction oriented from the viewpoint of a person standing within the cabin of the aircraft, and the terms "outside", "outboard", and "exterior" shall refer to a direction oriented from the viewpoint of a person outside of the cabin observing the aircraft. Thus, a foam insulation panel will have an interior side and an exterior side, where the interior side is the insulation panel surface facing a trim sidewall of the aircraft and the exterior side is the insulation panel surface facing an outboard wall of the aircraft. Other such descriptions will be obvious from the context.

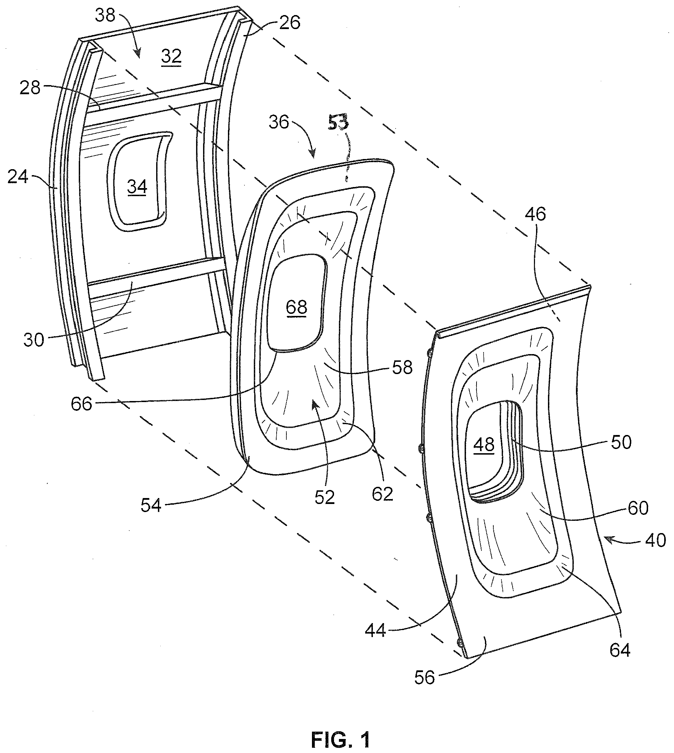

FIG. 1 illustrates a section of an aircraft frame bay 38 including vertical frame members 24, 26 and horizontal stringers 28, 30. An outboard wall 32 may be coupled to exterior sides of the frame members 24, 26 and stringers 28, 30 and may include an opening 34. A foam insulation panel 36 may be configured for insertion into the frame bay 38 between the vertical frame members 24, 26, and a trim sidewall 40 may be attached to the frame bay 38 to extend over the foam insulation panel 36. The trim sidewall 40 may be formed as a curved structure that is pre-shaped to conform to the curve of the aircraft frame bay 38, so that an inboard surface 44 of the trim sidewall 40 may have a generally concave aspect and an outboard surface 46 of the trim sidewall may have a generally convex aspect. The trim sidewall 40 may define a trim opening 48 to accommodate a window reveal 50. The trim opening 48 may be configured to oppose the opening 34 formed in the outboard wall 32.

The foam insulation panel 36 may have a panel inboard surface 52 sized and shaped to closely fit against the trim sidewall 40. More specifically, the panel inboard surface 52 may include one or more panel features, such as contours, shapes, apertures, or voids that conform to or otherwise accommodate features provided in the trim sidewall 40. For example, a panel perimeter frame contour 54 may extend around an outer edge of the foam insulation panel that is shaped to conform to an outer periphery 56 of the trim sidewall 40. The foam insulation panel 36 may also include a curved recess contour 58 extending in an outboard direction relative to the panel perimeter frame 54 that is shaped complementary to a trim recess 60 of the trim sidewall 40. A transition contour 62 may be formed in the foam insulation panel 36 that extends between the panel perimeter frame contour 54 and the curved recess contour 58 and conforms to a window transition 64 of the trim sidewall 40. Still further, the foam insulation panel 36 may include a window contour 66 formed in the curved recess contour 58 and defining a window aperture 68, with the window contour 66 conforming to the shape of the window reveal 50 of the trim sidewall 40.

Additionally or alternatively, the foam insulation panel 36 may have a panel outboard surface 53 sized and shaped to closely fit against the frame bay 38. The panel outboard surface 53 may include one or more panel features, such as contours, shapes, apertures, or voids that conform to or otherwise accommodate features provided in the frame bay 38. For example, the frame bay 38 may include openings, brackets, shade mechanisms, or other structures, and the panel outboard surface 53 may be formed with panel features that are shaped complementary to or otherwise conform to the features provided in the frame bay 38.

As used herein, the term "aircraft sidewall assembly" includes the frame bay 38 and the trim sidewall 40. Accordingly, a feature of the aircraft sidewall assembly may be provided by or associated with the frame bay 38, the trim sidewall 40, or both. Similarly, the panel feature may be provided on the panel inboard surface 52, the panel outboard surface 53, or both panel surfaces. Still further, the foam insulation panel 36 may include multiple panel features formed on the inboard surface 52, outboard surface 53, or both surfaces. In some embodiments, the panel feature may extend entirely through a thickness of the foam insulation panel 36 to form on aperture or other void.

The foam insulation panel 36 may be formed of material selected for one or more advantageous properties. Exemplary advantageous properties include high sound absorption, high heat resistance, sufficient fireproof qualities, sufficient flexibility, and/or is easy to process into desired shapes. Suitable foam insulation materials include polymeric, cellular, or solid member materials having a density of less than 6.4 kilogram per cubic metre (0.4 pounds per cubic foot). Preferred foam compositions include the melamine-based open-celled thermosetting foams, polyimide foams, or other foam compositions.

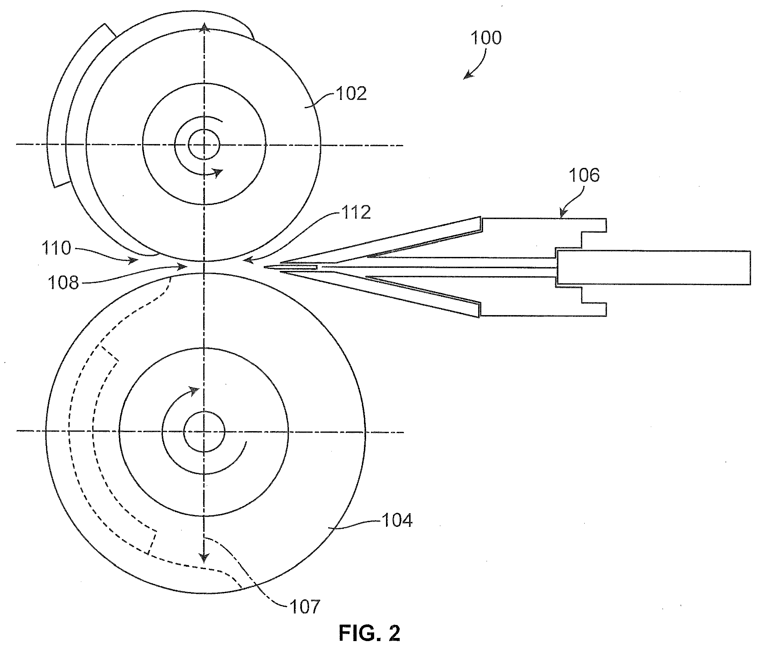

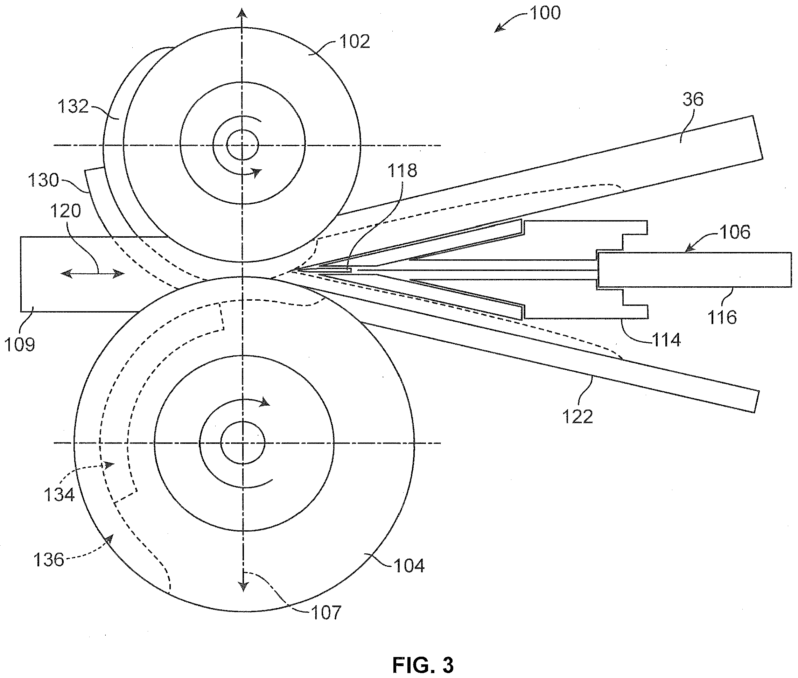

Referring now to FIGS. 2-4, surface forming apparatus 100 may be employed to automate the formation of one or more panel features in the foam insulation panel 36, thereby minimizing or eliminating the drawbacks associated with manual shaping of the panels. In the exemplary embodiment, the surface forming apparatus 100 may include a first roller die 102, a second roller die 104, and a cutter assembly 106. The first and second roller dies 102, 104 may be spaced apart by a distance that defines a nip 108 (FIG. 2) therebetween that is sized to engage and compress opposed surfaces of a foam block 109 (FIG. 3) in a first direction 107. In operation, the first and second roller dies 102, 104 are counter-rotated so that a foam block 109 fed into the upstream side 110 of the nip 108 is engaged, compressed, and advanced along a travel path toward a downstream side 112 of the nip 108.

The cutter assembly 106 is positioned along the travel path downstream of the nip 108. As best shown in FIGS. 2 and 3, the cutter assembly 106 may include a support head 114 coupled to a cutting head actuator 116. A cutting blade 118 may be coupled to the support head 114 and configured to cut through the foam insulation material. In operation, as the foam block 109 is advanced downstream along the travel path, the cutting blade 118 is oriented to transversely cut the foam insulation block 109 in a second direction 120 substantially perpendicular to the first direction 107, thereby to separate the foam insulation block 109 into an excess layer 122 and the foam insulation panel 36. The cutting blade 118 may be positioned so that it engages the foam block 109 while the foam block is still at least partially compressed by the roller dies 102, 104.

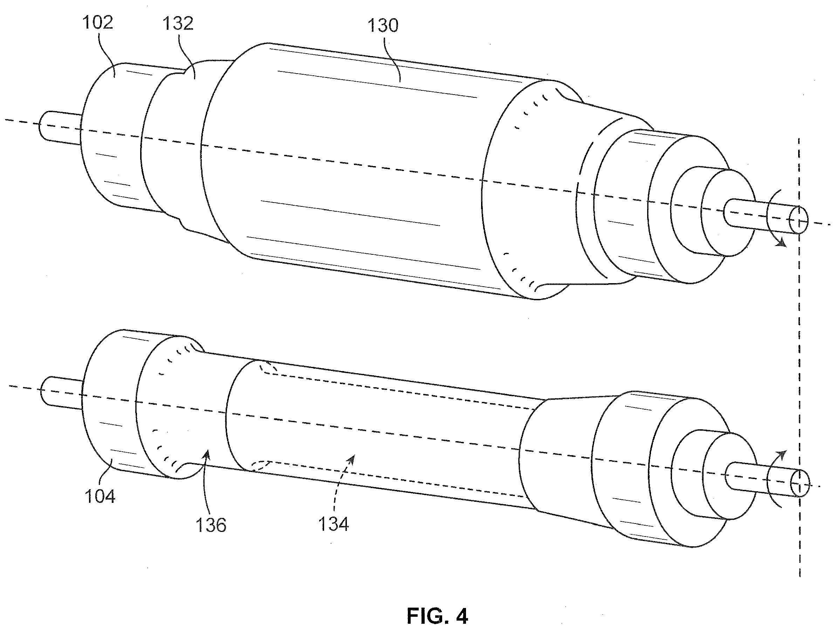

The first and second roller dies 102, 104 may be configured to manipulate the position of the foam block 109 relative to the cutting blade 118, thereby to form one or more panel features in the foam insulation panel 36 that conform to features of the aircraft sidewall assembly. For example, as best shown in FIG. 4, the first roller die 102 may include a first male die portion 130 and a second male die portion 132. Similarly, the second roller die 104 may include a first female die portion 134 and a second female die portion 136. The first male die portion 130 may be shaped complementary to the first female die portion 134, while the second male die portion 132 may be shaped complementary to the second female die portion 136. The associated sets of male/female die portions effectively translate the foam block 109 along the first direction 107 relative to the cutting blade 118, thereby to form panel features in the foam insulation panel 36. For example, the associated pair of first male and female die portions 130, 134 may translate the foam block 109 by a first offset distance, while the associated pair of second male and female die portions 132, 136 may translate the foam block 109 by a second offset distance that is less than the first offset distance. The first and second offset distances may be pre-determined from the aircraft sidewall assembly features to which the panel features may conform.

In the illustrated embodiment, the first and second male die portions 130, 134 are arranged on the first roller die 102 in a tiered configuration. Similarly, the first and second female die portions 134, 136 are also arranged in a tiered configuration on the second roller die 104. Alternative configurations may be used without departing from the scope of the claims.

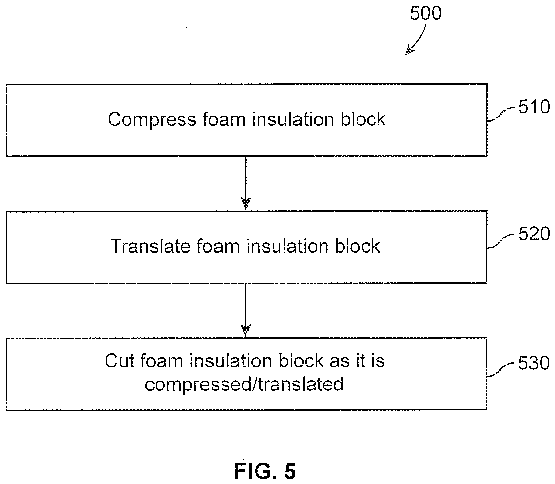

In view of the foregoing, an automated method 500 for manufacturing the foam insulation panel 36 to include one or more panel features conforming to one or more associated feature of the aircraft sidewall assembly may be performed, as illustrated by the flow diagram of FIG. 5. The steps of the method may be performed in other sequences than the particular sequence shown, and the particular sequence shown by the flowchart is representative.

At block 510, opposed first and second surfaces of a foam insulation block 109 may be compressed in a first direction 107, such as between first and second die rollers 102, 104. At block 520, the foam insulation block 109 may be translated in the first direction 107 by an offset distance determined from the aircraft sidewall assembly first feature. Translation in the first direction 107 may be performed by the first male die portion 130 provided on the first roller die 102 and a first female die portion 134 provided on the second roller die 104. The compression and translation operations identified by blocks 510 and 520 may occur in the sequence shown, in an opposite sequence (where translation occurs prior to compression), or simultaneously (as may occur with the die rollers 102, 104 illustrated in FIGS. 2-4).

At block 530, the foam insulation block 109 may be transversely cut in a second direction 120 substantially perpendicular to the first direction 107 as the foam insulation block 109 emerges from the first and second die rollers 102, 104, thereby to separate the foam insulation block into the excess layer 122 and the foam insulation panel 36. The compression and/or translation of the foam insulation block 109 adjusts the position of the foam block 109 relative to the cutter, so that the panel features may be formed.

Apparatus and methods are disclosed for automating the formation of panel features in a foam insulation panel. The apparatus and methods are more precise and easily repeatable when compared to the conventional manual processes used to shape and form the foam insulation panels, thereby reducing the time needed to manufacture panel features that sufficiently conform to features provided in the aircraft sidewall assembly (i.e., the frame bay 38 and/or the trim sidewall 40.

## Claims

1. A method (500) for manufacturing a foam insulation panel (36) to include a first panel feature (50, 54, 58, 62) conforming to a first feature (56, 60, 64, 66) of an aircraft sidewall assembly (40), the method comprising:
rotating first and second roller dies (102, 104) to advance a foam insulation block (109) along a travel path;
compressing opposed first and second surfaces of the foam insulation block (109) in a first direction (107);
positioning a cutter (106) along the travel path downstream of the first and second roller dies (102, 104) and orientating said cutter to cut transversely through the foam insulation block (109) in a second direction (120) substantially perpendicular to the first direction (107) to separate the foam insulation block (109) into an excess layer (122) and the foam insulation panel (36); and
translating the foam insulation block (109) in the first direction (107) by an offset distance determined from the aircraft sidewall assembly first feature (56, 60, 64, 66) to form the first panel feature (50, 54, 58, 62) in the foam insulation panel (36),
wherein the first and second roller dies (102, 104) are configured to compress and translate the foam insulation block (109),
wherein the first roller die (102) includes a first male die portion (130) and the second roller die (104) includes a first female die portion (134) having a shape complementary to the first male die portion (130), wherein the first male die portion (130) and the first female die portion (134) are sized relative to the aircraft sidewall assembly first feature.

2. The method of claim 1, in which compressing and translating the foam insulation block (109) are performed simultaneously.

3. The method of claim 1 or 2, in which the aircraft sidewall assembly (40) further comprises a second feature (56, 60, 64, 66), the method further comprising translating the foam insulation block (109) in the first direction (107) by a second offset distance determined from the aircraft sidewall assembly second feature (56, 60, 64, 66) to form a second panel feature (50, 54, 58, 62) in the foam insulation panel (36).

4. The method of any of claims 1 to 3, in which the first roller die (102) includes a second male die portion (132), the second roller die (104) includes a second female die portion (136) having a shape complementary to the second male die portion (132), and the second male die portion (132) and the second female die portion (136) are sized relative to the aircraft sidewall assembly second feature (50, 56, 60, 64).

5. The method of any of claims 1 to 4, in which the first and second male die portions (130, 132) are positioned in a tiered configuration on the first roller die (102), and in which the first and second female die portions (134, 136) are positioned in a tiered configuration on the second roller die (104).

6. The method of any of claims 3 to 5, in which the aircraft sidewall assembly first feature (50, 56, 60, 64) comprises a window reveal (50) defining a trim opening (48) and the aircraft sidewall assembly second feature (56, 60, 64, 66) comprises a trim recess (60), and in which the first male and female die portions (130, 134) are configured to form the first panel feature (54, 58, 62) as a window aperture corresponding to the trim opening, and the second male and female die portions (132, 136) are configured to form the second panel feature (54, 58, 62) as a curved recess contour having a shape complementary to the trim recess (60).

7. Surface forming apparatus (100) for manufacturing a foam insulation panel (36) to include a first panel feature (54, 58, 62) conforming to a first feature of an aircraft sidewall assembly, the surface forming apparatus comprising:
first and second roller dies (102, 104) positioned to engage and compress opposed first and second surfaces of a foam block (109) in a first direction (107), the first and second roller dies (102, 104) being rotatable to advance the foam block (109) along a travel path;
a first male die portion (130) provided on the first roller die (102) and a first female die portion (134) provided on the second roller die (104) and shaped complementary to the first male die portion (130), the first male and female die portions (130, 134) configured to translate the foam insulation block (109) in the first direction (107) by an offset distance; and
a cutter (106) positioned along the travel path downstream of the first and second roller dies (102, 104) and oriented to transversely cut the foam insulation block (109) in a second direction (120) substantially perpendicular to the first direction (107) thereby to separate the foam insulation block (109) into an excess layer (122) and the foam insulation panel (36), wherein the first male die portion (130) and the first female die portion (134) are configured to form the first panel feature (54, 58, 62) in the foam insulation panel (36).

8. The apparatus (100) of claim 7, in which the offset distance of the first male and female die portions (130, 134) is determined from the aircraft sidewall assembly first feature.

9. The apparatus (100) of any of claims 7 to 8, in which the aircraft sidewall assembly further includes a second feature, and in which the apparatus further includes a second male die portion (132) provided on the first roller die (102), and a second female die portion (136) provided on the second roller die (104) and shaped complementary to the second male die portion (132), the second male and female die portions (132, 136) configured to translate the foam insulation block (109) in the first direction (107) by a second offset distance.

10. The apparatus of claim 9, in which the second offset distance of the second male and female die portions (132, 136) is determined from the aircraft sidewall assembly second feature.

11. The apparatus (100) of any of claims 9 to 10, in which the first and second male die portions (130, 132)are positioned in a tiered configuration on the first roller die (102), and in which the first and second female die portions (134, 136) are positioned in a tiered configuration on the second roller die (104).

12. The apparatus (100) of any of claims 9 to 11, in which the aircraft sidewall assembly first feature (56, 60, 64, 66) comprises a window reveal (50) defining a trim opening (48) and the aircraft sidewall assembly second feature (56, 60, 64, 66) comprises a trim recess (60), and in which the first male and female die portions (130, 134) are configured to form the first panel feature (54, 58, 62) as a window aperture corresponding to the trim opening, and the second male and female die portions (132, 136) are configured to form the second panel feature as a curved recess contour having a shape complementary to the trim recess (60).

13. The apparatus (100) of any of claims 9 to 12, in which the aircraft sidewall assembly first feature (66) comprises a window reveal (50) defining a trim opening (48), and in which the first male and female die portions (130, 134) are configured to form the first panel feature as a window aperture corresponding to the trim opening.

## Patentansprüche

1. Verfahren (500) zum Herstellen einer Schaumstoffisolationsplatte (36) derart, dass sie ein erstes Plattenmerkmal (50, 54, 58, 62) beinhaltet, das einem ersten Merkmal (56, 60, 64, 66) einer Flugzeugseitenwandbaugruppe (40) entspricht, wobei das Verfahren umfasst:
Drehen einer ersten und einer zweiten Walzenmatrize (102, 104), um einen Schaumstoffisolationsblock (109) entlang eines Verfahrwegs vorzuschieben;
Verdichten von gegenüberliegenden ersten und zweiten Oberflächen des Schaumstoffisolationsblocks (109) in einer ersten Richtung (107);
Positionieren eines Schneidwerkzeugs (106) entlang des Verfahrwegs stromabwärts der ersten und der zweiten Walzenmatrize (102, 104) und Ausrichten des Schneidwerkzeugs, um quer durch den Schaumstoffisolationsblock (109) in einer zweiten Richtung (120) im Wesentlichen senkrecht zur ersten Richtung (107) zu schneiden, um den Schaumstoffisolationsblock (109) in eine überschüssige Schicht (122) und die Schaumstoffisolationsplatte (36) zu trennen; und
Verschieben des Schaumstoffisolationsblocks (109) in die erste Richtung (107) um einen Versatzabstand, der von dem ersten Merkmal (56, 60, 64, 66) der Flugzeugseitenwandbaugruppe bestimmt wird, um das erste Plattenmerkmal (50, 54, 58, 62) in der Schaumstoffisolationsplatte (36) zu formen,
wobei die erste und die zweite Walzenmatrize (102, 104) konfiguriert sind, um den Schaumstoffisolationsblock (109) zu komprimieren und zu verschieben,
wobei die erste Walzenmatrize (102) einen ersten vorspringenden Matrizenabschnitt (130) und die zweite Walzenmatrize (104) einen ersten rückspringenden Matrizenabschnitt (134) mit einer zu dem ersten vorspringenden Matrizenabschnitt (130) komplementären Form aufweist, wobei der erste vorspringende Matrizenabschnitt (130) und der erste rückspringende Matrizenabschnitt (134) relativ zu dem ersten Merkmal der Flugzeugseitenwandbaugruppe bemessen sind.

2. Verfahren nach Anspruch 1, bei dem das Verdichten und das Verschieben des Schaumstoffisolationsblocks (109) gleichzeitig durchgeführt wird.

3. Verfahren nach Anspruch 1 oder 2, bei dem die Flugzeugseitenwandbaugruppe (40) ferner ein zweites Merkmal (56, 60, 64, 66) umfasst, wobei das Verfahren ferner das Verschieben des Schaumstoffisolationsblocks (109) in die erste Richtung (107) um einen zweiten Versatzabstand umfasst, der von dem zweiten Merkmal (56, 60, 64, 66) der Flugzeugseitenwandbaugruppe bestimmt wird, um ein zweites Plattenmerkmal (50, 54, 58, 62) in der Schaumstoffisolationsplatte (36) zu formen.

4. Verfahren nach einem der Ansprüche 1 bis 3, bei dem die erste Walzenmatrize (102) einen zweiten vorspringenden Matrizenabschnitt (132) aufweist, die zweite Walzenmatrize (104) einen zweiten rückspringenden Matrizenabschnitt (136) mit einer zu dem zweiten vorspringenden Matrizenabschnitt (132) komplementären Form aufweist, und der zweite vorspringende Matrizenabschnitt (132) und der zweite rückspringende Matrizenabschnitt (136) in Bezug auf das zweite Merkmal (50, 56, 60, 64) der Flugzeugseitenwandbaugruppe bemessen sind.

5. Verfahren nach einem der Ansprüche 1 bis 4, bei dem der erste und der zweite vorspringende Matrizenabschnitt (130, 132) in einer abgestuften Konfiguration auf der ersten Walzenmatrize (102) positioniert sind, und bei dem der erste und der zweite rückspringende Matrizenabschnitt (134, 136) in einer abgestuften Konfiguration auf der zweiten Walzenmatrize (104) positioniert sind.

6. Verfahren nach einem der Ansprüche 3 bis 5, bei dem das erste Merkmal (50, 56, 60, 64) der Flugzeugseitenwandbaugruppe eine Fensterlaibung (50) umfasst, die eine Verkleidungsöffnung (48) definiert, und das zweite Merkmal (56, 60, 64, 66) der Flugzeugseitenwandbaugruppe eine Verkleidungsaussparung (60) umfasst,
und wobei der erste vorspringenden und der erste rückspringende Matrizenabschnitt (130, 134) konfiguriert sind, um das erste Plattenmerkmal (54, 58, 62) als Fensteröffnung entsprechend der Verkleidungsöffnung zu formen, und
der zweite vorspringende und der zweite rückspringende Matrizenabschnitt (132, 136) konfiguriert sind, um das zweite Plattenmerkmal (54, 58, 62) als eine gekrümmte Aussparungskontur mit einer zu der Verkleidungsaussparung (60) komplementären Form zu formen.

7. Oberflächenformvorrichtung (100) zum Herstellen einer Schaumstoffisolationsplatte (36) derart, dass sie ein erstes Plattenmerkmal (54, 58, 62) beinhaltet, das einem ersten Merkmal einer Flugzeugseitenwandbaugruppe entspricht, wobei die Oberflächenformvorrichtung umfasst:
eine erste und eine zweite Walzenmatrize (102, 104), die positioniert sind, um gegenüberliegende erste und zweite Oberflächen eines Schaumblocks (109) in einer ersten Richtung (107) in Eingriff zu nehmen und zu komprimieren, wobei die erste und die zweite Walzenmatrizen (102, 104) drehbar sind, um den Schaumblock (109) entlang eines Verfahrwegs vorzuschieben;
einen ersten vorspringenden Matrizenabschnitt (130), der auf der ersten Matrizenwalze (102) vorgesehen ist, und einen ersten rückspringenden Matrizenabschnitt (134), der auf der zweiten Matrizenwalze (104) vorgesehen und komplementär zu dem ersten vorspringenden Matrizenabschnitt (130) geformt ist, wobei der erste vorspringende und der erste rückspringende Matrizenabschnitt (130, 134) konfiguriert sind, um den Schaumstoffisolationsblock (109) in die erste Richtung (107) um einen Versatzabstand zu verschieben; und
ein Schneidwerkzeug (106), das entlang des Verfahrwegs stromabwärts von der ersten und der zweiten Walzenmatrize (102, 104) positioniert und ausgerichtet ist, um den Schaumstoffisolationsblock (109) in einer zweiten Richtung (120) im Wesentlichen senkrecht zur ersten Richtung (107) quer zu schneiden, um so den Schaumstoffisolationsblock (109) in eine überschüssige Schicht (122) und die Schaumstoffisolationsplatte (36) zu trennen, wobei der erste vorspringende Matrizenabschnitt (130) und der erste rückspringende Matrizenabschnitt (134) konfiguriert sind, um das erste Plattenmerkmal (54, 58, 62) in der Schaumstoffisolationsplatte (36) zu formen.

8. Vorrichtung (100) nach Anspruch 7, bei der der Versatzabstand der ersten vorspringenden und rückspringenden Matrizenabschnitte (130, 134) anhand des erstes Merkmal der Flugzeugseitenwandbaugruppe bestimmt ist.

9. Vorrichtung (100) nach einem der Ansprüche 7 bis 8, bei der die Flugzeugseitenwandbaugruppe ferner ein zweites Merkmal beinhaltet, und wobei die Vorrichtung ferner einen zweiten vorspringenden Matrizenabschnitt (132), der auf der ersten Matrizenwalze (102) vorgesehen ist, und einen zweiten rückspringenden Matrizenabschnitt (136), der auf der zweiten Matrizenwalze (104) vorgesehen und komplementär zu dem zweiten vorspringenden Matrizenabschnitt (132) geformt ist, beinhaltet, wobei die zweiten vorspringenden und rückspringenden Matrizenabschnitte (132, 136) konfiguriert sind, um den Schaumstoffisolationsblock (109) in der ersten Richtung (107) um einen zweiten Versatzweg zu verschieben.

10. Vorrichtung nach Anspruch 9, bei der der zweite Versatzabstand des zweiten vorspringenden und rückspringenden Matrizenabschnitts (132, 136) anhand des zweiten Merkmals der Flugzeugseitenwandbaugruppe bestimmt ist.

11. Vorrichtung (100) nach einem der Ansprüche 9 bis 10, bei der der erste und der zweite vorspringende Matrizenabschnitt (130, 132) in einer abgestuften Konfiguration auf der ersten Walzenmatrize (102) positioniert sind, und bei der der erste und der zweite rückspringende Matrizenabschnitt (134, 136) in einer abgestuften Konfiguration auf der zweiten Walzenmatrize (104) positioniert sind.

12. Vorrichtung (100) nach einem der Ansprüche 9 bis 11, bei der das erste Merkmal (56, 60, 64, 66) der Flugzeugseitenwandbaugruppe eine Fensterlaibung (50) umfasst, die eine Verkleidungsöffnung (48) definiert, und das zweite Merkmal (56, 60, 64, 66) der Flugzeugseitenwandbaugruppe eine Verkleidungsaussparung (60) umfasst, und bei der die ersten vorspringenden und rückspringenden Matrizenabschnitte (130, 134) konfiguriert sind, um das erste Plattenmerkmal (54, 58, 62) als eine der Verkleidungsöffnung entsprechende Fensteröffnung zu formen, und die zweiten vorspringenden und rückspringenden Matrizenabschnitte (132, 136) konfiguriert sind, um das zweite Plattenelement als eine gekrümmte Aussparungskontur mit einer zu der Verkleidungsaussparung (60) komplementären Form zu formen.

13. Vorrichtung (100) nach einem der Ansprüche 9 bis 12, bei der das erste Merkmal (66) der Flugzeugseitenwandbaugruppe eine Fensterlaibung (50) umfasst, die eine Verkleidungsöffnung (48) definiert, und bei der die ersten vorspringenden und rückspringenden Matrizenabschnitte (130, 134) konfiguriert sind, um das erste Plattenmerkmal als eine der Verkleidungsöffnung entsprechende Fensteröffnung zu formen.

## Revendications

1. Procédé (500) de fabrication d'un panneau d'isolant en mousse (36) pour qu'il comprenne une première caractéristique de panneau (50, 54, 58, 62) se conformant à une première caractéristique (56, 60, 64, 66) d'un ensemble de paroi latérale d'aéronef (40), le procédé comprenant :
faire tourner des premier et second cylindres de matriçage (102, 104) pour faire avancer un bloc d'isolant en mousse (109) le long d'un trajet de déplacement ;
comprimer des première et seconde surfaces opposées du bloc d'isolant en mousse (109) dans une première direction (107) ;
positionner un dispositif de découpe (106) le long du trajet de déplacement en aval des premier et second cylindres de matriçage (102, 104) et orienter ledit dispositif de découpe de manière à découper transversalement à travers le bloc d'isolant en mousse (109) dans une seconde direction (120) sensiblement perpendiculaire à la première une direction (107) afin de séparer le bloc d'isolant en mousse (109) en une couche en excès (122) et le panneau d'isolant en mousse (36) ; et
déplacer en translation le bloc d'isolant en mousse (109) dans la première direction (107) d'une distance de décalage déterminée à partir de la première caractéristique d'ensemble de paroi latérale d'aéronef (56, 60, 64, 66) pour former la première caractéristique de panneau (50, 54, 58, 62) dans le panneau d'isolant en mousse (36),
dans lequel les premier et second cylindres de matriçage (102, 104) sont configurés pour comprimer et déplacer en translation le bloc d'isolant en mousse (109),
dans lequel le premier cylindre de matriçage (102) comprend une première partie de matrice mâle (130) et le second cylindre de matriçage (104) comprend une première partie de matrice femelle (134) ayant une forme complémentaire à la première partie de matrice mâle (130), dans lequel la première partie de matrice mâle (130) et la première partie de matrice femelle (134) sont dimensionnées par rapport à la première caractéristique d'ensemble de paroi latérale d'aéronef.

2. Procédé selon la revendication 1, dans lequel la compression et le déplacement en translation du bloc d'isolant en mousse (109) sont effectués simultanément.

3. Procédé selon la revendication 1 ou 2, dans lequel l'ensemble de paroi latérale d'aéronef (40) comprend en outre un seconde caractéristique (56, 60, 64, 66), le procédé comprenant en outre le déplacement en translation du bloc d'isolant en mousse (109) dans la première direction. (107) d'une seconde distance de décalage déterminée à partir de la seconde caractéristique d'ensemble de paroi latérale d'aéronef (56, 60, 64, 66) pour former une seconde caractéristique de panneau (50, 54, 58, 62) dans le panneau d'isolant en mousse (36).

4. Procédé selon l'une quelconque des revendications 1 à 3, dans lequel le premier cylindre de matriçage (102) comprend une seconde partie de matrice mâle (132), le second cylindre de matriçage (104) comprend une seconde partie de matrice femelle (136) ayant une forme complémentaires à la seconde partie de matrice mâle (132), et la seconde partie de matrice mâle (132) et la seconde partie de matrice femelle (136) sont dimensionnées par rapport à la seconde caractéristique d'ensemble de paroi latérale d'aéronef (50, 56, 60, 64).

5. Procédé selon l'une quelconque des revendications 1 à 4, dans lequel les première et seconde parties de matrice mâles (130, 132) sont positionnées dans une configuration en gradins sur le premier cylindre de matriçage (102), et dans lequel les première et seconde parties de matrice femelles (134, 136) sont positionnées dans une configuration en gradins sur le second cylindre de matriçage (104).

6. Procédé selon l'une quelconque des revendications 3 à 5, dans lequel la première caractéristique d'ensemble de paroi latérale d'aéronef (50, 56, 60, 64) comprend une embrasure (50) définissant une ouverture de garniture (48) et la seconde caractéristique d'ensemble de paroi latérale d'aéronef (56, 60, 64, 66) comprend un évidement de garniture (60) et dans lequel les premières parties de matrice mâle et femelle (130, 134) sont configurées pour former la première caractéristique de panneau (54, 58, 62) sous la forme d'une ouverture de fenêtre correspondant à l'ouverture de garniture, et les secondes parties de matrice mâle et femelle (132, 136) sont configurées pour former la seconde caractéristique de panneau (54, 58, 62) sous la forme d'un profil d'évidement incurvé ayant une forme complémentaire à l'évidement de garniture (60).

7. Appareil de formation de surface (100) pour la fabrication d'un panneau d'isolant en mousse (36) comprenant une première caractéristique de panneau (54, 58, 62) se conformant à une première caractéristique d'un ensemble de paroi latérale d'aéronef, l'appareil de formation de surface comprenant :
des premier et second cylindres de matriçage (102, 104) positionnées pour venir en prise avec et compresser des première et seconde surfaces opposées d'un bloc de mousse (109) dans une première direction (107), les premier et second cylindres de matriçage (102, 104) pouvant tourner pour faire avancer le bloc de mousse (109) le long d'un trajet de déplacement ;
une première partie de matrice mâle (130) prévue sur le premier cylindre de matriçage (102) et une première partie de matrice femelle (134) prévue sur le second cylindre de matriçage (104) et mise en forme de manière complémentaire par rapport à la première partie de matrice mâle (130), les premières parties de matrice mâle et femelle (130, 134) configurées pour déplacer en translation le bloc d'isolant en mousse (109) dans la première direction (107) d'une distance de décalage ; et
un dispositif de découpe (106) positionné le long du trajet de déplacement en aval des premier et second cylindres de matriçage (102, 104) et orienté pour découper transversalement le bloc d'isolant en mousse (109) dans une seconde direction (120) sensiblement perpendiculaire à la première direction (107), pour séparer ainsi le bloc d'isolant en mousse (109) en une couche en excès (122) et le panneau d'isolant en mousse (36), dans lequel la première partie de matrice mâle (130) et la première partie de matrice femelle (134) sont configurées pour former la première caractéristique de panneau (54, 58, 62) dans le panneau d'isolant en mousse (36).

8. Appareil (100) selon la revendication 7, dans lequel la distance de décalage des premières parties de matrice mâle et femelle (130, 134) est déterminée à partir de la première caractéristique d'ensemble de paroi latérale d'aéronef.

9. Appareil (100) selon l'une quelconque des revendications 7 à 8, dans lequel l'ensemble de paroi latérale d'aéronef comprend en outre une seconde caractéristique, et dans lequel l'appareil comprend en outre une seconde partie de matrice mâle (132) prévue sur le premier cylindre de matriçage (102) et une seconde partie de matrice femelle (136) prévue sur le second cylindre de matriçage (104) et mise forme de manière complémentaire par rapport à la seconde partie de matrice mâle (132), les secondes parties de matrice mâle et femelle (132, 136) étant configurées pour déplacer en translation le bloc d'isolant en mousse (109) dans la première direction (107) d'une seconde distance de décalage.

10. Appareil selon la revendication 9, dans lequel la seconde distance de décalage des secondes parties de matrice mâle et femelle (132, 136) est déterminée à partir de la seconde caractéristique d'ensemble de paroi latérale d'aéronef.

11. Appareil (100) selon l'une quelconque des revendications 9 à 10, dans lequel les première et seconde parties de matrice mâles (130, 132) sont positionnées dans une configuration en gradins sur le premier cylindre de matriçage (102), et dans lequel des secondes parties de matrice femelles (134, 136) sont positionnées dans une configuration en gradins sur le second cylindre de matriçage (104).

12. Appareil (100) selon l'une quelconque des revendications 9 à 11, dans lequel la première caractéristique d'ensemble de paroi latérale d'aéronef (56, 60, 64, 66) comprend une embrasure (50) définissant une ouverture de garniture (48) et la seconde caractéristique d'ensemble de paroi latérale d'aéronef (56, 60, 64, 66) comprend un évidement de garniture (60), et dans lequel les premières parties de matrice mâle et femelle (130, 134) sont configurées pour former la première caractéristique de panneau (54, 58, 62) sous la forme d'une ouverture de fenêtre correspondant à l'ouverture de garniture, et les secondes parties de matrice mâle et femelle (132, 136) sont configurées pour former la seconde caractéristique de panneau sous la forme d'un profil d'évidement incurvé ayant une forme complémentaire à l'évidement de garniture (60).

13. Appareil (100) selon l'une quelconque des revendications 9 à 12, dans lequel la première caractéristique d'ensemble de paroi latérale d'aéronef (66) comprend une embrasure (50) définissant une ouverture de garniture (48), et dans lequel les premières parties de matrice mâle et femelle (130, 134) sont configurées pour former la première caractéristique de panneau en tant qu'ouverture de fenêtre correspondant à l'ouverture de la garniture.
